# EUROPÄISCHE PATENTANMELDUNG

(11) **EP 1 249 454 A1**
(43) Veröffentlichungstag der Anmeldung: **16.10.2002**
(21) Anmeldenummer: 02007327.6
(22) Anmeldetag: 04.04.2002
(51) Int. Cl.: C07F 7/18

(54) **Verfahren zur Herstellung ungesättigter Organosiliciumverbindundungen**

(30) Priorität: 12.04.2001 DE 10118489
(71) Anmelder: Wacker-Chemie GmbH, 81737 München (DE)
(72) Erfinder: Pfeiffer, Jürgen, Dr., 84489 Burghausen (DE); John, Peter, Dr., 84489 Burghausen (DE)
(74) Vertreter: Budczinski, Angelika

(57) **Zusammenfassung**

Verfahren zur Herstellung ungesättigter, carbonyloxyorganische Gruppen aufweisender Organosilane der allgemeinen Formel

(R¹O)₃₋ₙR² ₙSi-X-OC(O)C(R³)=CR³ ₂ (I),

wobei
R¹, R², X, R³ und n die in Anspruch 1 angegebenen Bedeutungen haben,
durch Umsetzung von halogenorganofunktionellen Siliciumverbindungen der Formel

(R¹O)₃₋ₙ(R²) ₙSi-X-Y (II),

wobei R¹, R², X und n die oben angegebenen Bedeutungen haben und Y ein Halogenatom darstellt,
mit Salz einer ungesättigten organischen Carbonsäure der Formel

M⁺ [⁻OC(O)C(R³)=CR³ ₂]ₒ (III),

wobei
R³, M und o die in Anspruch 1 angegebenen Bedeutungen haben, in Anwesenheit von Phosphoniumsalz als Phasentransferkatalysator.

## Beschreibung

Die Erfindung betrifft ein Verfahren zur Herstellung ungesättigter, carbonyloxyorganische Gruppen aufweisender Organosiliciumverbindungen in Anwesenheit von Phosphoniumsalzen als Phasentransferkatalysatoren.

Siliciumverbindungen mit ungesättigten organischen Carbonyloxy-Funktionen wie z.B. 3-Methacryloxypropyltrimethoxysilan finden weitverbreitete Anwendung als Haftvermittler zwischen anorganischen und organischen Materialien, so z.B. in Schlichten für Glasfasern oder auch als Quervernetzer in organischen Polymeren.
Verschiedene Verfahren zur Herstellung derartiger Verbindungen sind bekannt. So beschreibt u.a. DE 2851456 C2 die Hydrosilylierung von SiH-Bindungen enthaltenden Chlorsilanen mit ungesättigten organischen Molekülen wie Allylmethacrylat unter Metallkatalyse zu entsprechend ungesättigt organisch funktionalisierten Chlorsilanen. Der Nachteil bei diesem Verfahren ist die Tatsache, dass der nachfolgende, zum Erhalt der entsprechend Alkoxy-funktionalisierten Silane notwendige Alkoholyseschritt aufgrund der hohen Polymerisationsneigung der ungesättigten organischen Funktionalität in den meisten Fällen nicht kontinuierlich durchgeführt werden kann.
Neben diesem Verfahren ist, z.B. aus DE 38 32 621 C1, auch die direkte Reaktion eines SiH-Bindungen enthaltenden Alkoxysilans mit ungesättigten organischen Molekülen unter Metallkatalyse bekannt. Dieses Verfahren besitzt jedoch den großen Nachteil, dass die zur Durchführung notwendigen, zum Teil hochtoxischen und zur Zersetzung neigenden Alkoxysilane besondere Sicherheitsrisiken in sich bergen.

Bei den u.a. in EP 242 627 A2 und EP 437 653 B1 beschriebenen Verfahren werden dagegen die beschriebenen Verbindungen durch nukleophile Substitutionsreaktion zwischen einem Metall- oder Ammoniumsalz einer ungesättigten organischen Säure und einem halogenorganofunktionalisierten Silan erhalten. Dabei wird das Salz der ungesättigten organischen Säure auf verschiedenen Wegen gewonnen: Nach dem in EP 242 627 A2 beschriebenen Verfahren wird durch Reaktion der ungesättigten organischen Säure mit einem tertiären Amin das Ammoniumsalz gewonnen, welches sofort im gleichen Reaktionsgefäß mit der halogenorganischen Siliciumverbindung umgesetzt werden kann. Als nachteilig wirkt sich dabei jedoch die geringe Reaktivität der Ammoniumsalze der ungesättigten organischen Säuren aus, was zu sehr langen Reaktionszeiten und damit verbunden zu einer großen Gefahr der Polymerisation des Produktes führt. In EP 437 653 B1 werden zwei alternative Methoden beschrieben: Bei dem einen Verfahren wird das isolierte Natrium- oder Kalium-Salz der ungesättigten organischen Säure eingesetzt. Dies hat den Nachteil, dass dieses Salz erst in einem eigenen Prozess synthetisiert und aufwendig getrocknet werden muss. Daneben kann das Metallsalz der ungesättigten organischen Säure auch durch Umsetzung des entsprechenden Metallalkoholates in dem entsprechenden Alkohol durch Umsetzung mit der ungesättigten organischen Säure erhalten werden. Nach Zugabe der halogenorganofunktionalisierten Siliciumverbindung und destillativem Entfernen des Alkohols kann die Reaktion dann im gleichen Reaktionsgefäß erfolgen. Dieses Verfahren birgt den Nachteil in sich, dass die verwendeten Metallalkoholate i.a. korrosiv, hochreaktiv und sehr kostspielig sind und zusätzlich große Mengen des jeweiligen, teils toxischen Alkohols als Solvens benötigt werden, was die Attraktivität dieses Verfahrens deutlich verringert.

Gegenstand der Erfindung ist ein Verfahren zur Herstellung ungesättigter, carbonyloxyorganische Gruppen aufweisender Organosilane der allgemeinen Formel

(R¹O)₃₋ₙR² ₙSi-X-OC (O) C (R³) =CR³ ₂ (I),

wobei
R¹ gleich oder verschieden sein kann und einen einwertigen, gegebenenfalls substituierten Kohlenwasserstoffrest mit 1 bis 10 Kohlenstoffatomen, der mit Sauerstoffatomen unterbrochen sein kann, bedeutet,
R² gleich oder verschieden sein kann und einen einwertigen, SiC-gebundenen, gegebenenfalls substituierten Kohlenwasserstoffrest mit 1 bis 10 Kohlenstoffatomen, der mit Sauerstoffatomen unterbrochen sein kann, oder Sil(oxan)ylrest bedeutet,
X einen zweiwertigen, gegebenenfalls substituierten Kohlenwasserstoffrest mit 1 bis 40 Kohlenstoffatomen, der mit Sauerstoffatomen unterbrochen sein kann, bedeutet,
R³ gleich oder verschieden sein kann und Wasserstoffatom oder einen einwertigen, gegebenenfalls substituierten Kohlenwasserstoffrest mit 1 bis 40 Kohlenstoffatomen, der mit Sauerstoffatomen unterbrochen sein kann, bedeutet und
n 0, 1, 2 oder 3 ist,
durch Umsetzung von halogenorganofunktionellen Siliciumverbindungen der Formel

(R¹O)₃₋ₙR² ₙSi-X-Y (II),

wobei R¹, R², X und n die oben angegebenen Bedeutungen haben und Y ein Halogenatom darstellt,
mit Salz einer ungesättigten organischen Carbonsäure der Formel

M⁺ [⁻OC(O)C(R³)=CR³ ₂]ₒ (III),

wobei
R³ die obige Bedeutung hat, M Alkali- oder Erdalkalimetallatom bedeutet und o entsprechend der Wertigkeit von M 1 oder 2 sein kann,
in Anwesenheit von Phosphoniumsalz als Phasentransferkatalysator.

Beispiele für Reste R¹ sind die für Rest R³ angegebenen Reste mit 1 bis 10 Kohlenstoffatomen.

Bevorzugt handelt es sich bei R¹ um gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, besonders bevorzugt um den Methyl-, Ethyl-, 2-Methoxyethyl-, Phenyl- oder Isopropylrest, insbesondere um den Ethyl- oder Methylrest.

Beispiele für Rest R² sind die für Rest R³ angegebenen Reste mit 1 bis 10 Kohlenstoffatomen sowie Sil(oxan)ylreste der Formel (V) R₃Si-(OSiR₂)ₚO-, wobei R gleich oder verschieden sein kann und eine für R¹ angegebene Bedeutung hat, p 0 oder eine ganze Zahl von 1 bis 100 bedeutet, mit der Maßgabe, dass die Reste R sowohl direkt, also SiC-gebunden, als auch über Sauerstoff an das Siliciumatom gebunden sein können.

Bevorzugt handelt es sich bei Rest R² um gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, sowie um Sil(oxan)ylreste der Formel (V), besonders bevorzugt um den Phenyl-, Ethyl-, Methyloder Pentamethoxydisiloxylrest, insbesondere um den Methyl- oder den Ethylrest.

Beispiele für Rest X sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest; Hexylenreste, wie der n-Hexylenrest; Heptylenreste, wie der n-Heptylenrest; Octylenreste, wie der n-Octylenrest und iso-Octylenreste, wie der 2,2,4-Trimethylpentylenrest; Nonylenreste, wie der n-Nonylenrest; Decylenreste, wie der n-Decylenrest; Dodecylenreste, wie der n-Dodecylenrest; Octadecylenreste, wie der n-Octadecylenrest; Alkenylenreste, wie der Vinylen- und n-Propenylenrest; Arylenreste, wie der Phenylen-, Phenylmethylen-, Phenylethylen-, 1-Phenylpropylen- und der 2-Phenylpropylenrest, sowie (Poly)Alkylenoxygruppen der Formel (VI) -(CH₂)_{q}(OZ)ₘ-, wobei m eine ganze Zahl von 1 bis 100 ist, q eine ganze Zahl von 1 bis 6 ist und Z die Bedeutung von Ethylen-, n-Propylen-, Isopropylen-, n-Butylen- oder Isobutylenrest hat.

Bevorzugt handelt es sich bei X um zweiwertige, gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, besonders bevorzugt um n-Propylen-, iso-Propylen-, n-Butylen-, iso-Butylen-, Methylen-, Ethylen- oder *p*-Phenylenreste, insbesondere um den Methylenoder den n-Propylenrest.

Beispiele für gegebenenfalls substituierte Kohlenwasserstoffrete R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest, sowie Dialkylaminoalkylreste, wie der Dimethylaminomethyl-, der 2-Dimethylaminoethyl- und der 2-Dimethylaminopropylrest.

Bevorzugt handelt es sich bei Rest R³ um Wasserstoffatom oder gegebenenfalls mit Stickstoff, Schwefel oder Phosphor substituierte Kohlenwasserstoffreste mit 1 bis 10 Kohlenstoffatomen, die mit Sauerstoffatomen unterbrochen sein können, besonders bevorzugt um Wasserstoffatom, den Methyl- oder den Ethylrest, insbesondere um Wasserstoffatom oder den Methylrest.

Bevorzugt hat n die Bedeutung von 0 oder 1.

Bevorzugt hat Y die Bedeutung von Iod-, Brom- oder Chloratom, besonders bevorzugt Chloratom.

Beispiele für M sind Alkalimetallatome, wie Li, Na, K und Rb, sowie Erdalkalimetallatome, wie Mg, Ca, Sr und Ba.

Bevorzugt handelt es sich bei M um Natrium oder Kalium, insbesondere um Kalium.

Im Fall von M gleich Alkalimetallatom hat o in Formel (III) die Bedeutung von 1 und im Fall von M gleich Erdalkalimetallatom ist o gleich 2.

Beispiele für die nach dem erfindungsgemäßen Verfahren herstellbaren ungesättigten, carbonyloxyorganische Gruppen aufweisenden Organosilane der allgemeinen Formel (I) sind Acryloxymethyltrimethoxysilan, Acryloxymethyltriethoxysilan, Acryloxymethyltriphenoxysilan, Acryloxymethyltris(2-methoxyethoxy)silan, Acryloxymethyltriisopropoxysilan, Acryloxymethyl(dimethoxy)methylsilan, Acryloxymethyl(diethoxy)methylsilan, Acryloxymethyl(diphenoxy)methylsilan, Acryloxymethylbis(2-methoxyethoxy)methylsilan, Acryloxymethyl(diisopropoxy)methylsilan, Acryloxymethyl (dimethyl)methoxysilan, Acryloxymethyl(dimethyl)ethoxysilan, Acryloxymethyl(dimethyl)phenoxysilan, Acryloxymethyl-(dimethyl)(2-methoxyethoxy)silan, Acryloxymethyl(dimethyl)isopropoxysilan, Methacryloxymethyltrimethoxysilan, Methacryloxymethyltriethoxysilan, Methacryloxymethyltriphenoxysilan, Methacryloxymethyltris(2-methoxyethoxy)silan, Methacryloxymethyltriisopropoxysilan, Methacryloxymethyl(dimethoxy)methylsilan, Methacryloxymethyl(diethoxy)methylsilan, Methacryloxymethyl(diphenoxy)methylsilan, Methacryloxymethylbis(2-methoxyethoxy)methylsilan, Methacryloxymethyl(diisopropoxy)methylsilan, Methacryloxymethyl (dimethyl)methoxysilan, Methacryloxymethyl(dimethyl)ethoxysilan, Methacryloxymethyl(dimethyl)phenoxysilan, Methacryloxymethyl(dimethyl)(2-methoxyethoxy)silan, Methacryloxymethyl(dimethyl)isopropoxysilan, 3-Acryloxypropyltrimethoxysilan, 3-Acryloxypropyltriethoxysilan, 3-Acryloxypropyltriphenoxysilan, 3-Acryloxypropyltris(2-methoxyethoxy)silan, 3-Acryloxypropyltriisopropoxysilan, 3-Acryloxypropyl(dimethoxy)methylsilan, 3-Acryloxypropyl(diethoxy)methylsilan, 3-Acryloxypropyl-(diphenoxy)methylsilan, 3-Acryloxypropylbis(2-methoxyethoxy)-methylsilan, 3-Acryloxypropyl(diisopropoxy)methylsilan, 3-Acryloxypropyl (dimethyl)methoxysilan, 3-Acryloxypropyl (dimethyl)ethoxysilan, 3-Acryloxypropyl(dimethyl)phenoxysilan, 3-Acryloxypropyl(dimethyl)(2-methoxyethoxy)silan, 3-Acryloxypropyl(dimethyl)isopropoxysilan, 3-Methacryloxypropyltrimethoxysilan, 3-Methacryloxypropyltriethoxysilan, 3-Methacryloxypropyltriphenoxysilan, 3-Methacryloxypropyltris(2-methoxyethoxy)silan, 3-Methacryloxypropyltriisopropoxysilan, 3-Methacryloxypropyl(dimethoxy)methylsilan, 3-Methacryloxypropyl(diethoxy)methylsilan, 3-Methacryloxypropyl(diphenoxy)methylsilan, 3-Methacryloxypropylbis(2-methoxyethoxy)methylsilan, 3-Methacryloxypropyl(diisopropoxy)methylsilan, 3-Methacryloxypropyl-(dimethyl)methoxysilan, 3-Methacryloxypropyl(dimethyl)ethoxysilan, 3-Methacryloxypropyl(dimethyl)phenoxysilan, 3-Methacryloxypropyl(dimethyl)(2-methoxyethoxy)silan und 3-Methacryloxypropyl(dimethyl)isopropoxysilan.

Beispiele für die im erfindungsgemäßen Verfahren eingesetzten halogenorganofunktionellen Siliciumverbindungen der Formel (II) sind Chlormethyltrimethoxysilan, Brommethyltrimethoxysilan, Chlormethyltriethoxysilan, Brommethyltriethoxysilan, Chlormethyltriphenoxysilan, Brommethyltriphenoxysilan, Chlormethyltris(2-methoxyethoxy)silan, Brommethyltris(2-methoxyethoxy)silan, Chlormethyltriisopropoxysilan, Brommethyltriisopropoxysilan, Chlormethyl(dimethoxy)methylsilan, Brommethyl(dimethoxy)-methylsilan, Chlormethyl(diethoxy)methylsilan, Brommethyl(diethoxy)methylsilan, Chlormethyl(diphenoxy)methylsilan, Brommethyl (diphenoxy)methylsilan, Chlormethylbis(2-methoxyethoxy)methylsilan, Brommethylbis(2-methoxyethoxy)methylsilan, Chlormethyl(diisopropoxy)methylsilan, Brommethyl(diisopropoxy)methylsilan, Chlormethyl(dimethyl)methoxysilan, Brommethyl(dimethyl)-methoxysilan, Chlormethyl(dimethyl)ethoxysilan, Brommethyl(dimethyl)ethoxysilan, Chlormethyl(dimethyl)phenoxysilan, Brommethyl(dimethyl)phenoxysilan, Chlormethyl(dimethyl)(2-methoxyethoxy)silan, Brommethyl(dimethyl)(2-methoxyethoxy)silan, Chlormethyl(dimethyl)isopropoxysilan, Brommethyl(dimethyl)isopropoxysilan, 3-Chlorpropyltrimethoxysilan, 3-Brompropyltrimethoxysilan, 3-Chlorpropyltriethoxysilan, 3-Brompropyltriethoxysilan, 3-Chlorpropyltriphenoxysilan, 3-Brompropyltriphenoxysilan, 3-Chlorpropyltris(2-methoxyethoxy)silan, 3-Brompropyltris(2-methoxyethoxy)silan, 3-Chlorpropyltriisopropoxysilan, 3-Brompropyltriisopropoxysilan, 3-Chlorpropyl(dimethoxy)methylsilan, 3-Brompropyl(dimethoxy)methylsilan, 3-Chlorpropyl(diethoxy)methylsilan, 3-Brompropyl(diethoxy)methylsilan, 3-Chlorpropyl (diphenoxy)methylsilan, 3-Brompropyl(diphenoxy)methylsilan, 3-Chlorpropylbis(2-methoxyethoxy)methylsilan, 3-Brompropylbis-(2-methoxyethoxy)methylsilan, 3-Chlorpropyl(diisopropoxy)methylsilan, 3-Brompropyl(diisopropoxy)methylsilan, 3-Chlorpropyl (dimethyl)methoxysilan, 3-Brompropyl(dimethyl)methoxysilan, 3-Chlorpropyl(dimethyl)ethoxysilan, 3-Brompropyl(dimethyl)ethoxysilan, 3-Chlorpropyl(dimethyl)phenoxysilan, 3-Brompropyl(dimethyl)phenoxysilan, 3-Chlorpropyl(dimethyl)(2-methoxyethoxy)-silan, 3-Brompropyl(dimethyl)(2-methoxyethoxy)silan, 3-Chlorpropyl(dimethyl)isopropoxysilan, 3-Brompropyl(dimethyl)isopropoxysilan.

Bevorzugt handelt es sich bei den erfindungsgemäß eingesetzten Siliciumverbindungen der Formel (II) um Chlormethyltrimethoxysilan, Chlormethyltriethoxysilan, Chlormethyl(dimethoxy)methylsilan, Chlormethyl(diethoxy)methylsilan, Chlormethyl(dimethyl)-methoxysilan, Chlormethyl(dimethyl)ethoxysilan, 3-Chlorpropyltrimethoxysilan, 3-Chlorpropyltriethoxysilan, 3-Chlorpropyl-(dimethoxy)methylsilan, 3-Chlorpropyl(diethoxy)methylsilan, 3-Chlorpropyl(dimethyl)methoxysilan und 3-Chlorpropyl(dimethyl)-ethoxysilan, wobei Chlormethyltrimethoxysilan, Chlormethyl(dimethoxy)methylsilan, 3-Chlorpropyltriethoxysilan, 3-Chlorpropyltrimethoxysilan und 3-Chlorpropyl(dimethoxy)methylsilan besonders bevorzugt sind.

Die im erfindungsgemäßen Verfahren eingesetzten halogenorganofunktionellen Siliciumverbindungen der Formel (II) sind handelsübliche Produkte bzw. nach in der Chemie gängigen Methoden herstellbar.

Beispiele für die im erfindungsgemäßen Verfahren eingesetzten Salze einer ungesättigten organischen Carbonsäure der Formel (III) sind Kaliumacrylat, Kaliummethacrylat, Natriumacrylat, Natriummethacrylat, *E*-But-2-ensäurekaliumsalz, *Z*-But-2-ensäurekaliumsalz, *E*-But-2-ensäurenatriumsalz, *Z*-But-2-ensäurenatriumsalz, *E*-2-Methyl-but-2-ensäurekaliumsalz, *Z*-2-Methyl-but-2-ensäurekaliumsalz, *E*-2-Methyl-but-2-ensäurenatriumsalz und *Z*-2-Methyl-but-2-ensäurenatriumsalz.

Die im erfindungsgemäßen Verfahren eingesetzten Salze der Formel (III) sind handelsübliche Produkte bzw. nach in der Chemie gängigen Methoden herstellbar.

Bevorzugt handelt es sich bei den erfindungsgemäß eingesetzten Salzen der Formel (III) um solche, die durch Umsetzung einer wässrigen Lösung eines Metallhydroxids (i) der Formel (VII) M(OH)ₖ, wobei M eine oben dafür angegebene Bedeutung hat und k abhängig von der Wertigkeit von M 1 oder 2 bedeutet, mit einer ungesättigten organischen Carbonsäure (ii) der Formel

HOC(O)C(R³)=CR³ ₂ (IV),

wobei R³ die oben angegebene Bedeutung hat,
in Anwesenheit eines organischen Lösungsmittels (iii), welches mit Wasser ein Azeotrop bildet und welches in flüssiger Form mit Wasser ein Zweiphasen-System bildet,
gefolgt von a) der Entfernung des Wassers durch azeotrope Destillation sowie weiter gefolgt von b) der destillativen Abtrennung von 10 bis 100 Gewichts-% des eingesetzten organischen Lösungsmittels.

Das so erhaltene Salz einer ungesättigten Carbonsäure, gegebenenfalls im Gemisch mit verbleibendem organischen Lösungsmittel (iii), kann dann vorteilhafterweise direkt, ohne weitere Aufarbeitungsschritte im erfindungsgemäßen Verfahren als Verbindung der Formel (III) eingesetzt werden. Dies beinhaltet auch den großen Vorteil, dass die Herstellung des im erfindungsgemäßen Verfahren eingesetzten Salzes der Formel (III) sowie dessen erfindungsgemäße Umsetzung mit den Siliciumverbindungen der Formel (II) in ein und demselben oder aber auch in zwei verschiedenen Reaktionsgefäßen durchgeführt werden können, wobei das aus dem ersten Reaktionsschritt resultierende, gegebenenfalls als Suspension vorliegende, nicht isolierte Salz der ungesättigten organischen Carbonsäure durch jedes beliebige Verfahren, z.B. über eine Schnecke oder über eine Pumpe, aus dem ersten Reaktionsbehälter in den zweiten Reaktionsbehälter, in dem dann die Umsetzung mit der Verbindung der Formel (II) durchgeführt wird, überführt werden kann.

Die azeotrope Abtrennung des Wassers a) und die nachfolgende destillative Abtrennung des organischen Lösungsmittels b) können entweder bei Normaldruck oder auch unter reduziertem Druck erfolgen, wobei der Druck bevorzugt zwischen 100 und 1000 hPa, besonders bevorzugt zwischen 200 und 300 hPa, liegt.

Organische Lösungsmittel (iii), die zur oben beschriebenen Herstellung des erfindungsgemäß eingesetzten Metallsalzes der Formel (III) verwendet werden können, sind aromatische Kohlenwasserstoffe, die gegebenenfalls mit Alkylgruppen substituiert sein können, n-, iso- oder cyclo-Alkane mit 5 bis 10 Kohlenstoffatomen, oder symmetrische oder unsymmetrische Ether mit 2 bis 10 Kohlenstoffatomen, die lineare oder verzweigte Alkylgruppen oder Arylgruppen aufweisen können, oder beliebige Mischungen aus diesen Lösungsmitteln.

Beispiele für solche organische Lösungsmittel (iii) sind Toluol, m-, o-, und p-Xylol und deren Mischungen, n-Pentan, n-Hexan, n-Heptan, Cyclopentan, Cyclohexan, Cyclooctan, Cyclohexen, Z-Cycloocten, Diethylether, tert.-Butylmethylether oder Di-nbutylether, wobei es sich bevorzugt um n-Heptan, Xylole und deren Mischungen oder Toluol und besonders bevorzugt um Toluol handelt.

Beispiele für ungesättigte organische Säuren (ii) der Formel (IV) sind Acrylsäure, Methacrylsäure, E-But-2-ensäure, Z-But-2-ensäure, E-2-Methyl-but-2-ensäure und Z-2-Methyl-but-2-ensäure.

Das molare Verhältnis der ungesättigten organischen Säure (ii) zum Metallhydroxid (i) der Formel (VII) kann für k = 1 zwischen 0,5 und 2, bevorzugt 0,8 bis 1,2 und besonders bevorzugt 1, betragen. Für k = 2 kann dieses molare Verhältnis 1 bis 3, bevorzugt 1,5 bis 2,5 und besonders bevorzugt 2, betragen.

Falls im erfindungsgemäßen Verfahren das Salz der Formel (III) im Gemisch mit organischem Lösungsmittel (iii) eingesetzt wird, kann dieses entweder bei Normaldruck oder auch bei reduziertem Druck, bevorzugt bei einem Druck von 200 bis 300 hPa, destillativ, gegebenenfalls durch Rektifikation, aus dem erfindungsgemäßen Reaktionsgemisch ganz oder teilweise entfernt werden.

Die erfindungsgemäße Umsetzung von Salz der ungesättigten organischen Säure der Formel (III) mit einer halogenorganofunktionellen Siliciumverbindung der Formel (II) wird bei Temperaturen von bevorzugt 60 bis 150°C, besonders bevorzugt 70 bis 120°C, durchgeführt.

Das erfindungsgemäße Verfahren wird bei einem Druck von bevorzugt 100 bis 1000 hPa, besonders bevorzugt 200 bis 300hPa, durchgeführt.

Bei dem erfindungsgemäßen Verfahren liegt das molare Verhältnis von halogenorganofunktioneller Siliciumverbindung der Formel (II) zur Carboxylgruppe im Salz der Formel (III)zwischen bevorzugt 0,5 und 1,5, besonders bevorzugt zwischen 0,9 und 1,1, insbesondere zwischen 1 und 1,05.

Das erfindungsgemässe Verfahren kann an Luft oder unter einer Inertgasatmosphäre durchgeführt werden, wobei unter Inertgas ein solches zu verstehen ist, welches gegen die im Reaktionsgemisch enthaltenen Komponenten unter den gegebenen Reaktionsbedingungen unreaktiv ist, wie z.B. unter Stickstoff oder Argon oder Gemischen davon. Bevorzugt wird das Verfahren unter Intergasatmosphäre, besonders bevorzugt unter Stickstoffatmosphäre, durchgeführt. Falls erwünscht kann die erfindungsgemäße Umsetzung auch unter einer Stickstoffatmosphäre durchgeführt werden, welche 0,1 bis 2 Prozent Sauerstoff enthält.

Das erfindungsgemäße Verfahren wird bevorzugt unter weitgehendem Ausschluss von Wasser durchgeführt, was durch übliche Verfahren zum Entfernen von Wasserspuren aus den im Reaktionsgefäß vorhandenen Komponenten, wie Trocknen z.B. der organischen Lösungsmittel oder der Inertgasatmosphäre etc., erreicht werden kann.

Bei dem erfindungsgemäßen Verfahren wird Phasentransferkatalysator in Mengen von bevorzugt 0,1 bis 20 Gewichtsprozent, besonders bevorzugt 0,5 bis 5 Gewichtsprozent, insbesondere 0,8 bis 2 Gewichtsprozent, jeweils bezogen auf die Menge der eingesetzten halogenorganofunktionellen Siliciumverbindung der Formel (II), eingesetzt.

Beispiele für die erfindungsgemäß eingesetzten Phasentransferkatalysatoren sind quarternäre Phosphonium-Salze, wie Tetra-nbutylphosphoniumbromid, Tetra-n-butylphosphoniumchlorid, Methyltri-n-butylphosphoniumchlorid, Methyltri-n-butylphosphoniumbromid, n-Butyltriphenylphosphoniumbromid, n-Butyltriphenylphosphoniumchlorid, Methyltriphenylphosphoniumchlorid und Methyltriphenylphosphoniumbromid, wobei Methyltriphenylphosphoniumchlorid, n-Butyltriphenylphosphoniumbromid und Tetra-n-butylphosphoniumbromid besonders bevorzugt sind.

Die erfindungsgemäße Umsetzung der halogenorganofunktionellen Verbindung der Formel (II) mit den Salzen der Formel (III) kann in Anwesenheit oder Abwesenheit von organischem Lösungsmittel durchgeführt werden, wobei die Verwendung von organischem Lösungsmittel, insbesondere die Verwendung von polar-aprotischem Lösungsmittel bevorzugt ist .

Falls bei dem erfindungsgemäßen Verfahren organisches Lösungsmittel verwendet wird, handelt es sich um Mengen von bevorzugt 5 bis 300 Gewichtsprozent, besonders bevorzugt 10 bis 100 Gewichtsprozent, insbesondere 20 bis 50 Gewichtsprozent, jeweils bezogen auf die Menge an eingesetzter halogenorganischer Siliciumverbindung der Formel (II).

Beispiele für organische, polar-aprotische Lösungsmittel, die im erfindungsgemäßen Verfahren eingesetzt werden können, sind solche, welche die erfindungsgemäße Reaktion unterstützen, wie etwa Aceton, N,N-Dimethylformamid, Dimethylsulfoxid, N-Methyl-2-pyrrolidon, γ-Butyrolacton, Diethylenglykoldimethylether und Diethylenglykoldiethylether, wobei Aceton, N,N-Dimethylformamid und N-Methyl-2-pyrrolidon bevorzugt sowie N,N-Dimethylformamid besonders bevorzugt sind.

Falls erwünscht, kann das erfindungsgemäße Verfahren in Anwesenheit von Inhibitoren, d.h. Verbindungen, welche die unerwünschte Polymerisation der Zielverbindungen über die ungesättigte organische Funktion verhindern, durchgeführt werden. Bei dem erfindungsgemäßen Verfahren werden Inhibitoren bevorzugt eingesetzt.

Beispiele für Inhibitoren, die bei dem erfindungsgemäßen Verfahren eingesetzt werden können, sind aromatische Amine, Chinone, Hydrochinone, sterisch gehinderte Phenole oder stabile Radikale, wie N,N'-Diphenyl-*p*-phenylendiamin, N,N'-Di-β-naphthyl*p*-phenylendiamin, Phenothiazin, Hydrochinon, Hydrochinonmonomethylether, 2,6-Di-tert-butyl-phenol, 2,6-Di-tert-butyl-4-methyl-phenol, 2,6-Di-tert-butyl-4-(N,N-dimethylamino)methylphenol und 2,2,6,6-Tetramethyl-piperidyl-*N*-oxid.

Falls bei dem erfindungsgemäßen Verfahren Inhibitoren eingesetzt werden, handelt es sich um Mengen von bevorzugt 0,01 bis 1 Gewichts-%, besonders bevorzugt 0,05 bis 0,4 Gewichts-%, jeweils bezogen auf die Menge der eingesetzten halogenorganofunktionalisierten Siliciumverbindung der Formel (II).

Bei dem erfindungsgemäßen Verfahren können außer halogenorganofunktioneller Siliciumverbindungen der Formel (II), Salz einer ungesättigten organischen Carbonsäure der Formel (III), Phosphoniumsalz als Phasentransferkatalysator, gegebenenfalls organischem Lösungsmittel und gegebenenfalls Inhibitor noch weitere, für nukleophile Substitutionsreaktionen übliche Zusatzstoffe eingesetzt werden, wie z.B. Alkalimetalliodide.
Darüberhinaus werden vorzugsweise keine weiteren Stoffe eingesetzt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bei dem erfindungsgemäßen Verfahren können die eingesetzten Komponenten in beliebiger Reihenfolge miteinander vermischt werden.

Nach Beendigung der erfindungsgemäßen Umsetzung können die erhaltenen ungesättigten, carbonyloxyorganische Gruppen aufweisenden Organosiliciumverbindungen nach an sich bekannten Verfahren isoliert bzw. gereinigt werden, wie z.B. durch Filtration oder Abzentrifugieren des entstehenden Metallhalogenids, Destillation, Rektifikation, Dünnschichtdestillation usw.

Die erhaltenen ungesättigten, carbonyloxyorganische Gruppen ausfweisenden Organosiliciumverbindungen können für alle Zwecke eingesetzt werden, für die auch bisher derartige Verbindungen eingesetzt wurden.

Nach einer bevorzugten Ausführungsform des erfindungsgemäßen Verfahrens werden halogenorganofunktionelle Siliciumverbindungen der Formel (II) mit Salz einer ungesättigten organischen Carbonsäure der Formel (III) in Anwesenheit von Phosphoniumsalz als Phasentransferkatalysator, polar-aprotischem organischen Lösungsmittel und Inhibitor umgesetzt .

Nach einer besonders bevorzugten Ausführungsform des erfindungsgemäßen Verfahrens werden halogenorganofunktionelle Siliciumverbindungen der Formel (II) mit Salz einer ungesättigten organischen Carbonsäure der Formel (III) in Anwesenheit von Phosphoniumsalz als Phasentransferkatalysator, polar-aprotischem organischen Lösungsmittel und Inhibitor umgesetzt, wobei das Salz der Formel (III) durch Umsetzung einer wässrigen Lösung eines Metallhydroxids (i) der Formel (VII) mit einer ungesättigten organischen Carbonsäure (ii) der Formel (IV) in Anwesenheit eines organischen Lösungsmittels (iii), welches mit Wasser ein Azeotrop bildet und welches in flüssiger Form mit Wasser ein Zweiphasen-System bildet, gefolgt von a) der Entfernung des Wassers durch azeotrope Destillation sowie weiter gefolgt von b) der destillativen Abtrennung von 10 bis 100 Gewichts-% des eingesetzten organischen Lösungsmittels hergestellt wird.

Das erfindungsgemäße Verfahren kann absatzweise oder kontinuierlich durchgeführt werden.

Das erfindungsgemäße Verfahren hat den Vorteil, dass es einfach in der Durchführung ist und ungesättigte, carbonyloxyorganische Gruppen aufweisende Organosiliciumverbindungen auf effiziente und kostengünstige Weise sowie in hohen Ausbeuten und Reinheiten hergestellt werden können.

Das erfindungsgemäße Verfahren hat insbesondere den Vorteil, dass durch den Einsatz von Phosphoniumsalzen als Phasentransferkatalysatoren während der Reaktion keine Zersetzungsprodukte gebildet werden, was den Erhalt eines hochreinen Produktes deutlich erleichtert.

Das erfindungsgemäße Verfahren hat darüber hinaus den Vorteil, dass durch den Einsatz von Phosphoniumsalzen als Phasentransfekatalysatoren in Kombination mit dem Einsatz von polar-aprotischen Lösungsmitteln die Zielprodukte der Formel (I) in ungewöhnlich kurzer Zeit unter sehr milden Bedingungen erhalten werden können.

Die erfindungsgemäße Verwendung von Salzen der Formel (III), welche durch die oben beschriebene Umsetzung von Metallhydroxiden (i) und ungesättigter Carbonsäuren (ii), verbunden mit azeotroper Entfernung des Wasser und nachfolgender Entfernung des organischen Lösungsmittels (iii) hergestellt wurden, hat beim Einsatz von Verbindungen der Formel (II) mit n≤2 insbesondere den Vorteil, dass unerwünschte Hydrolyse-/Kondensationsreaktionen vermieden werden können, die zur Bildung von Oligo- oder Polysiloxanen führen würden, wodurch zum einen Ausbeuteverluste an Zielprodukt auftreten und zum anderen schwer zu entfernende feste und flüssige Nebenprodukte entstehen würden.

Das erfindungsgemäße Verfahren zeichnet sich des weiteren dadurch aus, dass alle verwendeten Lösungsmittel wiederverwendet werden können, wodurch ein besonders schonender Umgang mit Ressourcen und Umwelt ermöglicht wird.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen. Alle in den Beispielen beschriebenen Umsetzungen wurden unter einer Inertgasatmosphäre, bestehend aus Stickstoff, durchgeführt.

### Beispiel 1

448,8 g (8 Mol) Kaliumhydroxid werden in 400 g Wasser gelöst, mit 2000 g Toluol überschichtet und mit 688,1 g (8 Mol) Methacrylsäure neutralisiert. Nach Absenken des Drucks auf 250 hPa wird alles Wasser mittels eines Schwerwasserabscheiders ausgekreist. Danach werden 1800 g Toluol aus der Reaktionsmischung abdestilliert. Die so erhaltene Suspension weist einen Wassergehalt von 0,05 % auf.
Nach Zugabe einer Lösung von 2,1 g N,N'-Diphenyl-*p*-phenylendiamin und 25 g Methyltriphenylphosphoniumchlorid in einer Mischung aus 1590 g (8 Mol) 3-Chlorpropyltrimethoxysilan und 400 g N,N-Dimethylformamid wird das Reaktionsgemisch bei 250 hPa erhitzt und weitere 400 g Toluol abdestilliert bis die Temperatur 115°C erreicht. Danach werden noch weitere zwei Stunden bei 115°C und 250 hPa gerührt. Nach Filtration vom entstandenen Kaliumchlorid wird das N,N-Dimethylformamid bei 50°C/5 hPa abgetrennt. Ein ¹H-NMR des verbleibenden Rohproduktes zeigt ein Produkt:Dimer-Verhältnis von 1 : 0,03. Das Rohprodukt wird mit 1,7 g 2,6-Di-tert-butyl-phenol versetzt. Durch Destillation bei 5 hPa über eine 20 cm Kolonne mit Raschig-Ringen werden bei einer Siedetemperatur von 102-103°C 1865 g 3-Methacryloxypropyltrimethoxysilan erhalten. Dies entspricht einer Ausbeute von 94 %.

### Vergleichsbeispiel 1

Die in Beispiel 1 beschriebene Verfahrensweise wird wiederholt mit dem Unterschied, dass auf den Einsatz von 25 g Methyltriphenylphosphoniumchlorid als Phasentransfer-Katalysator verzichtet wird. Zur vollständigen Reaktion des 3-Chlorpropyltrimethoxysilans ist achtstündiges Erhitzen auf 115°C notwendig. Ein ¹H-NMR der Reaktionslösung nach vollständiger Reaktion zeigt ein Produkt:Dimer-Verhältnis von 1:0,05. Es werden 1786 g (90 %) 3-Methacryloxypropyltrimethoxysilan erhalten.

### Vergleichsbeispiel 2

Die in Beispiel 1 beschriebene Verfahrensweise wird wiederholt mit dem Unterschied, dass anstelle von 25 g Methyltriphenylphosphoniumchlorid 25 g Tetra-n-butylammonium-hydrogensulfat eingesetzt wird. Zur vollständigen Reaktion des 3-Chlorpropyltrimethoxysilans ist fünfstündiges Erhitzen auf 115°C notwendig. Ein ¹H-NMR der Reaktionslösung nach vollständiger Reaktion zeigt ein Produkt:Dimer-Verhältnis von 1:0,04. Es werden 1825 g (92 %) 3-Methacryloxypropyl-trimethoxysilan erhalten. Das Produkt weist einen unangenehmen, fischartigen Geruch auf. In einem ¹H-NMR Spektrum lassen sich 0,2 % Tri-n-butylamin nachweisen.

### Beispiel 2

Die in Beispiel 1 beschriebene Verfahrensweise wird wiederholt, mit dem Unterschied, dass darauf verzichtet wird, vor Zugabe von N,N-Dimethylformamid, 3-Chlorpropyltrimethoxysilan, Methyltriphenylphosphoniumchlorid und N,N'-Diphenyl-*p*-phenylendiamin, Toluol abzudestillieren. Die vor der Zugabe von N,N-Dimethylformamid, 3-Chlorpropyltrimethoxysilan, Methyltriphenylphosphoniumchlorid und N,N'-Diphenyl-*p*-phenylendiamin erhaltene Suspension weist einen Wassergehalt von 0,3 % auf.
Ein ¹H-NMR der Reaktionslösung nach beendeter Reaktion zeigt ein Verhältnis Produkt:Dimer von 1:0,14. Durch Destillation werden 1250 g 3-Methacryloxypropyl-trimethoxysilan erhalten. Dies entspricht einer Ausbeute von 63 %.

### Beispiel 3

Die in Beispiel 1 beschriebene Verfahrensweise wird wiederholt, mit dem Unterschied, dass anstelle von 3-Chlorpropyltrimethoxysilan 3-Chlorpropyl(dimethoxy)methylsilan eingesetzt wird. Die vor Zugabe von N,N-Dimethylformamid, 3-Chlorpropyl(dimethoxy)-methylsilan, Methyltriphenylphosphoniumchlorid und N,N'-Diphenyl-p-phenylendiamin erhaltene Suspension weist einen Wassergehalt von 0,06 % auf. Ein ¹H-NMR der Reaktionslösung nach beendeter Reaktion zeigt ein Verhältnis Produkt:Dimer von 1:0,04. Durch Destillation werden 1708 g 3-Methacryloxypropyl(dimethoxy)methylsilan erhalten. Dies entspricht einer Ausbeute von 92 %.

### Beispiel 4

Die in Beispiel 3 beschriebene Verfahrensweise wird wiederholt, mit dem Unterschied, dass darauf verzichtet wird, vor Zugabe von N,N-Dimethylformamid, 3-Chlorpropyl(dimethoxy)methylsilan, Methyltriphenylphosphoniumchlorid und N,N'-Diphenyl-p-phenylendiamin, Toluol abzudestillieren. Die vor Zugabe von N,N-Dimethylformamid, 3-Chlorpropyl(dimethoxy)methylsilan, Methyltriphenylphosphoniumchlorid und N,N'-Diphenyl-*p*-phenylendiamin erhaltene Suspension weist einen Wassergehalt von 0,35 % auf.

Ein ¹H-NMR der Reaktionslösung nach beendeter Reaktion zeigt ein Verhältnis Produkt:Dimer von 1:0,2. Durch Destillation werden 1040 g 3-Methacryloxypropyl(dimethoxy)methylsilan erhalten. Dies entspricht einer Ausbeute von 56 %.

### Beispiel 5

Die in Beispiel 1 beschriebene Verfahrensweise wird wiederholt, mit dem Unterschied, dass anstelle von 3-Chlorpropyltrimethoxysilan Chlormethyl(dimethoxy)methylsilan eingesetzt wird. Die vor Zugabe von N,N-Dimethylformamid, Chlormethyl(dimethoxy)methylsilan, Methyltriphenylphosphoniumchlorid und N,N'-Diphenyl*p*-phenylendiamin erhaltene Suspension weist einen Wassergehalt von 0,02 % auf.
Ein ¹H-NMR der Reaktionslösung nach beendeter Reaktion zeigt ein Verhältnis Produkt:Dimer von 1:0,02. Durch Destillation bei einem Druck von 5 hPa werden bei einer Siedetemperatur von 78 bis 80°C 1550 g Methacryloxymethyl-(dimethoxy)methylsilan erhalten. Dies entspricht einer Ausbeute von 95 %.

### Beispiel 6

Die in Beispiel 5 beschriebene Verfahrensweise wird wiederholt, mit dem Unterschied, dass darauf verzichtet wird, vor Zugabe von N,N-Dimethylformamid, Chlormethyl(dimethoxy)methylsilan, Methyltriphenylphosphoniumchlorid und N,N'-Diphenyl-*p*-phenylendiamin, Toluol abzudestillieren. Die vor Zugabe von N,N-Dimethylformamid, Chlormethyl(dimethoxy)methylsilan, Methyltriphenylphosphoniumchlorid und N,N'-Diphenyl-p-phenylendiamin erhaltene Suspension weist einen Wassergehalt von 0,38 % auf. Ein ¹H-NMR der Reaktionslösung nach beendeter Reaktion zeigt ein Verhältnis Produkt:Dimer von 1:0,24. Durch Destillation werden 849 g Methacryloxymethyl(dimethoxy)methylsilan erhalten. Dies entspricht einer Ausbeute von 52 %.

### Beispiel 7

Die in Beispiel 1 beschriebene Verfahrensweise wird wiederholt mit dem Unterschied, dass auf den Einsatz von 400 g N,N-Dimethylformamid verzichtet wird. Zur vollständigen Reaktion des 3-Chlorpropyltrimethoxysilans ist zehnstündiges Erhitzen auf 115°C notwendig. Ein ¹H-NMR der Reaktionslösung nach vollständiger Reaktion zeigt ein Produkt:Dimer-Verhältnis von 1:0,06. Es werden 1667 g (84 %) 3-Methacryloxypropyltrimethoxysilan erhalten.

### Beispiel 8

448,8 g (8 Mol) Kaliumhydroxid werden in 400 g Wasser gelöst und mit 688,1 g (8 Mol) Methacrylsäure neutralisiert. Die so erhaltene Suspension wird am Rotationsverdampfer bei einer Temperatur von 50 °C und einem Druck von 20 hPa acht Stunden lang getrocknet. Das so erhaltene Kaliummethacrylat (Wassergehalt: 0,8 %) wird in ein mit Stickstoff geflutetes Reaktonsgefäß überführt und mit einer Lösung von 2,1 g N,N'-Diphenyl-*p*phenylendiamin und 25 g Methyltriphenylphosphoniumchlorid in einer Mischung aus 1590 g (8 Mol) 3-Chlorpropyltrimethoxysilan und 400 g N,N-Dimethylformamid versetzt. Das Reaktionsgemisch wird drei Stunden bei 115 °C und 250 hPa gerührt. Nach Abkühlen des Reaktionsgemisches auf Raumtemperatur und Filtration vom entstandenen Kaliumchlorid wird das N,N-Dimethylformamid bei 50°C/5 hPa abgetrennt. Ein ¹H-NMR des verbleibenden Rohproduktes zeigt ein Produkt:Dimer-Verhältnis von 1 : 0,12. Das Rohprodukt wird mit 1,7 g 2,6-Di-tert-butyl-phenol versetzt. Durch Destillation bei 5 hPa über eine 20 cm Kolonne mit Raschig-Ringen werden bei einer Siedetemperatur von 102-103°C 1349 g 3-Methacryloxypropyl-trimethoxysilan erhalten. Dies entspricht einer Ausbeute von 68 %.

## Patentansprüche

1. Verfahren zur Herstellung ungesättigter, carbonyloxyorganische Gruppen aufweisender Organosilane der allgemeinen Formel
(R¹O)₃₋ₙR² ₙSi-X-OC(O)C(R³)=CR³ ₂ (I),
wobei
R¹ gleich oder verschieden sein kann und einen einwertigen, gegebenenfalls substituierten Kohlenwasserstoffrest mit 1 bis 10 Kohlenstoffatomen, der mit Sauerstoffatomen unterbrochen sein kann, bedeutet,
R² gleich oder verschieden sein kann und einen einwertigen, SiC-gebundenen, gegebenenfalls substituierten Kohlenwasserstoffrest mit 1 bis 10 Kohlenstoffatomen, der mit Sauerstoffatomen unterbrochen sein kann, oder Sil(oxan)ylrest bedeutet,
X einen zweiwertigen, gegebenenfalls substituierten Kohlenwasserstoffrest mit 1 bis 40 Kohlenstoffatomen, der mit Sauerstoffatomen unterbrochen sein kann, bedeutet,
R³ gleich oder verschieden sein kann und Wasserstoffatom oder einen einwertigen, gegebenenfalls substituierten Kohlenwasserstoffrest mit 1 bis 40 Kohlenstoffatomen, der mit Sauerstoffatomen unterbrochen sein kann, bedeutet und
n 0, 1, 2 oder 3 ist,
durch Umsetzung von halogenorganofunktionellen Siliciumverbindungen der Formel
(R¹O)₃₋ₙ(R²)ₙSi-X-Y (II),
wobei R¹, R², X und n die oben angegebenen Bedeutungen haben und Y ein Halogenatom darstellt,
mit Salz einer ungesättigten organischen Carbonsäure der Formel
M⁺ [⁻OC(O)C(R³)=CR³ ₂]ₒ (III),
wobei
R³ die obige Bedeutung hat, M Alkali- oder Erdalkalimetallatom bedeutet und o entsprechend der Wertigkeit von M 1 oder 2 sein kann,
in Anwesenheit von Phosphoniumsalz als Phasentransferkatalysator.

2. Verfahren nach Anspruch 1, **dadurch gekennzeichnet, dass** das molare Verhältnis von halogenorganofunktioneller Siliciumverbindung der Formel (II) zur Carboxylgruppe im Salz der Formel (III) zwischen 0,5 und 1,5 liegt.

3. Verfahren nach Anspruch 1 oder 2, **dadurch gekennzeichnet, dass** das Verfahren unter Inertgasatmosphäre durchgeführt wird.

4. Verfahren nach einem oder mehreren der Ansprüche 1 bis 3, **dadurch gekennzeichnet, dass** Phasentransferkatalysator in Mengen von 0,1 bis 20 Gewichtsprozent, bezogen auf die Menge der eingesetzten halogenorganofunktionellen Siliciumverbindung der Formel (II), eingesetzt wird.

5. Verfahren nach einem oder mehreren der Ansprüche 1 bis 4, **dadurch gekennzeichnet, dass** als Salz der Formel (III) solches eingesetzt wird, das durch Umsetzung einer wässrigen Lösung eines Metallhydroxids (i) der Formel (VII) M(OH)ₖ, wobei M eine in Anspruch 1 dafür angegebene Bedeutung hat und k abhängig von der Wertgkeit von M 1 oder 2 bedeutet, mit einer ungesättigten organischen Carbonsäure (ii) der Formel
HOC(O)C(R³)=CR³ ₂ (IV),
wobei R³ die in Anspruch 1 angegebene Bedeutung hat,
in Anwesenheit eines organischen Lösungsmittels (iii), welches mit Wasser ein Azeotrop bildet und welches in flüssiger Form mit Wasser ein Zweiphasen-System bildet,
gefolgt von a) der Entfernung des Wassers durch azeotrope Destillation sowie weiter gefolgt von b) der destillativen Abtrennung von 10 bis 100 Gewichts-% des eingesetzten organischen Lösungsmittels erhalten wird.

6. Verfahren nach einem oder mehreren der Ansprüche 1 bis 5, **dadurch gekennzeichnet, dass** es in Anwesenheit von organischem Lösungsmittel durchgeführt wird.

7. Verfahren nach einem oder mehreren der Ansprüche 1 bis 6, **dadurch gekennzeichnet, dass** halogenorganofunktionelle Siliciumverbindungen der Formel (II) mit Salz einer ungesättigten organischen Carbonsäure der Formel (III) in Anwesenheit von Phosphoniumsalz als Phasentransferkatalysator, polar-aprotischem organischen Lösungsmittel und Inhibitor umgesetzt werden.

8. Verfahren nach einem oder mehreren der Ansprüche 1 bis 7, **dadurch gekennzeichnet, dass** halogenorganofunktionelle Siliciumverbindungen der Formel (II) mit Salz einer ungesättigten organischen Carbonsäure der Formel (III) in Anwesenheit von Phosphoniumsalz als Phasentransferkatalysator, polar-aprotischem organischen Lösungsmittel und Inhibitor umgesetzt werden, wobei das Salz der Formel (III) durch Umsetzung einer wässrigen Lösung eines Metallhydroxids (i) der Formel (VII) mit einer ungesättigten organischen Carbonsäure (ii) der Formel (IV) in Anwesenheit eines organischen Lösungsmittels (iii), welches mit Wasser ein Azeotrop bildet und welches in flüssiger Form mit Wasser ein Zweiphasen-System bildet, gefolgt von a) der Entfernung des Wassers durch azeotrope Destillation sowie weiter gefolgt von b) der destillativen Abtrennung von 10 bis 100 Gewichts-% des eingesetzten organischen Lösungsmittels hergestellt wird .
